# EUROPEAN PATENT APPLICATION

(11) **EP 4 683 045 A1**
(43) Date of publication of application: **21.01.2026**
(21) Application number: 24888945.3
(22) Date of filing: 07.10.2024
(51) Int. Cl.: H01M 10/617, H01M 10/6568, H01M 10/6571, H01M 10/63, H01M 10/625, H01M 10/627

(54) **BATTERY PACK AND DEVICE INCLUDING SAME**

(30) Priority: 09.11.2023 KR 20230154463
(71) Applicant: LG Energy Solution, Ltd., Seoul 07335 (KR)
(72) Inventor: CHAE, Minyoung, Daejeon 34122 (KR)
(74) Representative: Hoffmann Eitle
(86) International application number: PCT/KR2024/015217
(87) International publication number: WO 2025/100751

(57) **Abstract**

A battery pack according to an embodiment of the present disclosure includes: a plurality of battery modules including a plurality of battery cells; heat sinks that are disposed to correspond to each of the battery modules and cool the battery modules; a temperature control system that supplies and recovers a coolant to the heat sinks; a coolant line that connects the heat sinks and the temperature control system; and a BMS (Battery Management System) module that monitors and controls the state of the battery modules, wherein a three-way type control valve is provided in the coolant line connected to each of the heat sinks, and the BMS module adjusts the control valves based on the temperature of the battery module and controls whether or not a coolant is supplied to the heat sink corresponding to the battery module.

## Description

### [TECHNICAL FIELD]

### Cross-Reference to Related Application(s)

This application claims priority to and the benefit of Korean Patent Application No. 10-2023-0154463, filed on November 9, 2023, with the Korean Intellectual Property Office, the disclosure of which is incorporated herein by reference in its entirety.

The present disclosure relates to a battery pack and a device including the same, and more particularly, to a battery pack having a system that can efficiently utilize internal energy and a device including the same.

### [BACKGROUND]

The use of mobile devices such as cell phones, laptops, camcorders, and digital cameras has been routinized in modern society, which accelerates the development of technologies in the fields related to the mobile devices. Further, as a measure to solve the atmospheric pollution caused from existing gasoline vehicles that uses fossil fuels, rechargeable secondary batteries are being used as power sources for electric vehicles (EV), hybrid electric vehicles (HEV), plug-in hybrid electric vehicles (P-HEV) and so on. Thus, the necessity to develop the secondary batteries is increasing.

Generally, according to the exterior shapes of battery cases, lithium secondary batteries may be classified into can-shaped secondary batteries fabricated by mounting the electrode assembly in a metal can, and pouch-shaped secondary batteries fabricated by mounting the electrode assembly in a pouch made of an aluminum laminate sheet.

In case of secondary batteries used for small-size devices, two to three battery cells are disposed, and in case of secondary batteries used for medium- and large-size devices such as automobiles, a battery module is used, which includes a plurality of battery cells electrically connected to each other. In the battery module, the plurality of battery cells are connected in series or parallel to form a battery cell stack, which improves the capacity and the power. One or more battery modules may configure a battery pack by being mounted together with various control and protection systems such as a battery disconnect unit (BDU), a battery management system (BMS), and a cooling system.

When a secondary battery is heated over a proper temperature, the performance of the secondary battery may deteriorate, and in the worst case, there is also a risk of an explosion or ignition. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, and the lifetime is shortened, and when thermal runaway occurs, the possibility of explosion or ignition increases.

Moreover, in the case of a battery module included in a vehicle battery pack, it is frequently exposed to direct sunlight and may be placed under high-temperature conditions such as summer or desert areas. Therefore, when configuring a battery module or a battery pack, it may be very important to ensure a stable and effective cooling performance. Cooling methods of battery modules or battery packs can be largely classified into a water cooling method using a coolant such as cooling water and an air cooling method using cooling wind. Among them, water-cooled type cooling has excellent cooling performance and can effectively cool high heat generated from large-capacity battery modules or battery packs.

However, in the case of conventional battery packs, since a coolant line through which a coolant flows is unified, there is a problem that it is difficult to individually control the temperature in each region inside the battery pack. Such a unified cooling method has the problem that it is difficult to reduce the temperature deviation between battery modules inside the battery pack.

Therefore, there is a need to develop a cooling structure having a novel system that can actively control the temperature in each region inside the battery pack.

### [DETAILED DESCRIPTION OF THE INVENTION]

### [Technical Problem]

It is an object of the present disclosure to provide a battery pack having a system that can individually control the temperature in each region inside the battery pack, and a device including the same.

However, the technical objects solved by the embodiments of the present disclosure are not limited to those disclosed above, and may be expanded in various ways within the scope of the technical idea included in the present disclosure.

### [Technical Solution]

According to an embodiment of the present disclosure, there is provided a battery pack comprising: a plurality of battery modules including a plurality of battery cells; heat sinks that are disposed to correspond to each of the battery modules and cool the battery modules; a temperature control system that supplies and recovers a coolant to the heat sinks; a coolant line that connects the heat sinks and the temperature control system; and a BMS (Battery Management System) module that monitors and controls the state of the battery modules, wherein a three-way type control valve is provided in the coolant line connected to each of the heat sinks, and wherein the BMS module adjusts the control valves based on the temperature of the battery module and controls whether or not a coolant is supplied to the heat sink corresponding to the battery module.

The heat sinks are respectively disposed in one-to-one correspondence to each of the battery modules, so that the battery modules may have individually divided cooling zones.

When a temperature of the battery module is equal to or more than the upper limit temperature or equal to or less than the lower limit temperature, the BMS module may control the control valve connected to the heat sink corresponding to the battery module to supply a coolant to the heat sink.

The coolant line may comprise a coolant supply line that supplies the coolant to the heat sink, and a coolant discharge line that discharges the coolant from the heat sink, and the control valve may comprise a first control valve connected to the coolant supply line, and a second control valve connected to the coolant discharge line.

The BMS module may adjust the paths of the first control valve and the second control valve or the degree of opening and closing thereof, thereby controlling whether or not the coolant circulates to the heat sink or the flow rate of the coolant flowing through the heat sink.

The battery pack may further comprise a PRA (Power Relay Assembly) module that controls the electrical connection of the battery modules.

The battery pack may further comprise a control heat sink that is connected to the coolant line while being disposed to correspond to the PRA module. The control valve may be provided in the coolant line connected to the control heat sink.

The coolant supplied from the temperature control system may pass through the control valve disposed in the coolant line corresponding to the control heat sink, and flow to the control valve disposed in the coolant line corresponding to the heat sink.

The BMS module controls the control valve connected to the control heat sink to adjust the temperature of the coolant.

While the coolant flowing along the control heat sink is being heated by heat generated from the PRA module, the temperature of the coolant is adjusted

According to another embodiment of the present disclosure, there is provided a device comprising the battery pack.

### [Advantageous Effects]

According to embodiments of the present disclosure, based on a three-way type control valve, the BMS (Battery Management System) module can adjust whether or not coolant is supplied to the heat sink corresponding to each battery module. Thereby, the temperature of each battery module by region can be individually controlled based on the temperature of the battery module, thereby minimizing the temperature deviation between the battery modules.

In addition, heat generated from the PRA (Power Relay Assembly) module can be utilized to increase the temperature of the battery module, thereby efficiently utilizing the internal energy of the battery pack.

The effects of the present disclosure are not limited to the effects mentioned above and additional other effects not described above will be clearly understood from the description of the appended claims by those skilled in the art.

### [BRIEF DESCRIPTION OF THE DRAWING]

FIG. 1 is a plan view showing a battery pack according to an embodiment of the present disclosure.
FIG. 2 is a diagram showing the schematic configuration of a battery pack according to an embodiment of the present disclosure.
FIG. 3 is a perspective view showing a battery module according to one embodiment of the present disclosure.
FIG. 4 is an exploded perspective view of the battery module of FIG. 3.
FIG. 5 is a plan view showing one of the battery cells included in the battery module of FIG. 4.
FIG. 6 is a perspective view showing a three-way type control valve according to an embodiment of the present disclosure.
FIGS. 7 (a) and (b) are partial diagrams for explaining a form in which a coolant supply line and a coolant discharge line are connected to a heat sink according to an embodiment of the present disclosure, respectively.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be embodied in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Further, throughout the specification, when a portion is referred to as "including" a certain component, it means that the portion can further include other components, without excluding the other components, unless otherwise stated.

Throughout the descriptions herein, the terms "in a plan view" indicate viewing an object from above, and the terms "in a cross-sectional view" indicate viewing a vertical cross section of an object from side.

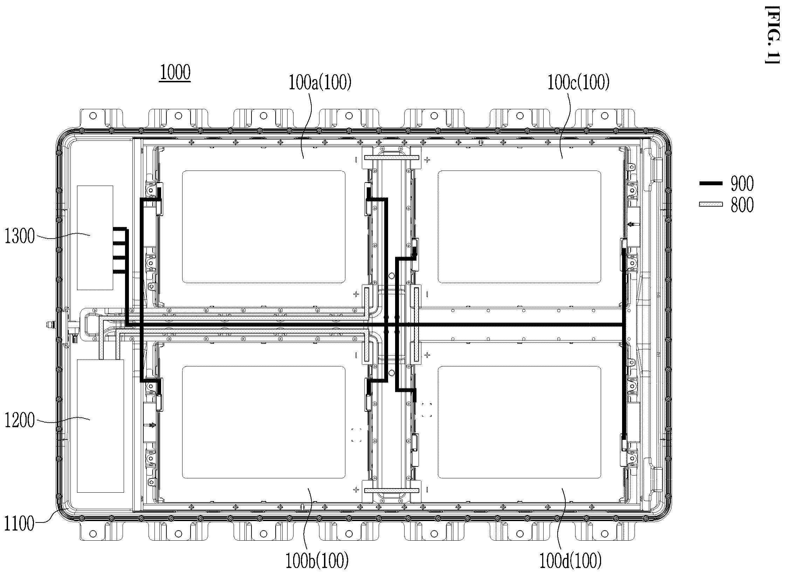

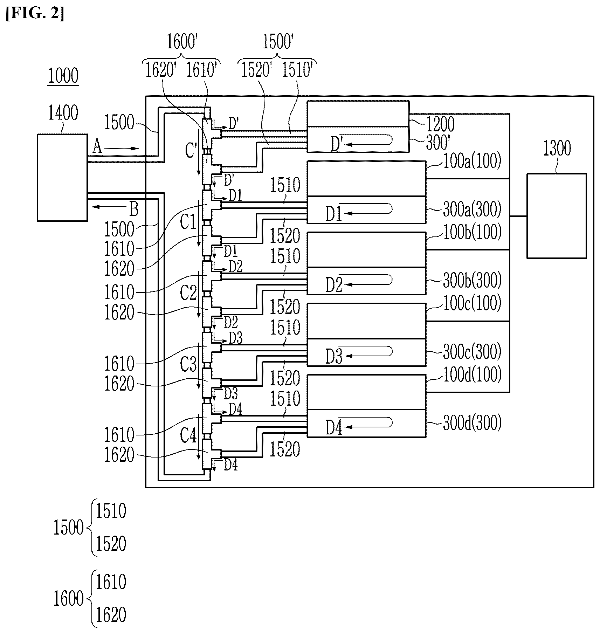

FIG. 1 is a plan view showing a battery pack according to an embodiment of the present disclosure. FIG. 2 is a diagram showing the schematic configuration of a battery pack according to an embodiment of the present disclosure.

Referring to FIGS. 1 and 2, a battery pack 1000 according to an embodiment of the present disclosure comprises a plurality of battery modules 100 including a plurality of battery cells; and a BMS (Battery Management System) module 1300 that monitors and controls the state of the battery module 100. The number of battery modules 100 included in one battery pack 1000 is not particularly limited.

Real-time temperature data or voltage data of battery cells 110 included in the battery module 100 are transmitted to the BMS module 1300 via the LV (low voltage) connection line 900. The BMS module 1300 can monitor and control the real-time operating state of the battery module 100 based on the temperature data or voltage data. The LV connection line 900 means a sensing connection for detecting and controlling the voltage and temperature of the battery module 100.

In addition, the battery pack 1000 may further include a PRA (Power Relay Assembly) module 1200 that controls the electrical connection of the battery modules 100. The electrical connection between the battery modules 100 or the electrical connection between the battery module 100 and the PRA module 1200 may be made by an HV (High voltage) connection line 800. The HV connection line 800 is a connection that serves as a power source for supplying power where high voltage is required, which means a connection between battery cells or a connection between battery modules, etc.

The PRA module 1200 corresponds to a so-called BDU (Battery Disconnection Unit) module, and is configured to control the electrical connection of the battery modules 100. The PRA module 1200 can cut off power source between the power conversion device and the battery module 100. That is, when a condition occurs in which the current exceeds the set range, the PRA module 1200 can cut off the power source of the battery pack 1000 to ensure the safety of the battery pack 1000.

The battery modules 100, BMS module 1300, and PRA module 1200 may be mounted on the pack frame 1100. As an example, the pack frame 1100 is a box-shaped structure with an open upper part, wherein the battery modules 100, BMS module 1300, and PRA module 1200 may be mounted in the internal space of the pack frame 1100. In addition, although not specifically shown in the figure, a pack cover may be further disposed to cover the open upper part of the pack frame 1100.

The battery pack 1000 according to the present embodiment includes heat sinks 300 that are disposed to correspond to each of the battery modules 100 and cool the battery modules 100; a temperature control system 1400 that supplies and recovers a coolant to the heat sinks 300; and a coolant line 1500 that connects the heat sinks 300 and the temperature control system 1400.

The coolant can be circulated in the inside of the heat sinks 300, wherein these heat sinks 300 can be respectively disposed in one-to-one correspondence to each of the battery modules 100, and each of the heat sinks 300 can cool or heat each of the battery modules 100 by using the coolant flowing inside it. In the battery pack 1000, the battery modules 100 can have individually divided cooling or heating zones. The coolant is not particularly limited, but cooling water can be applied.

As an example, a first battery module 100a, a second battery module 100b, a third battery module 100c, and a fourth battery module 100d may be disposed inside a single battery pack 1000. A first heat sink 300a, a second heat sink 300b, a third heat sink 300c, and a fourth heat sink 300d may be provided in one-to-one correspondence to each of the first battery module 100a, the second battery module 100b, the third battery module 100c, and the fourth battery module 100d.

The temperature control system 1400 can supply the coolant to each heat sink 300, and the coolant flowing along the heat sink 300 can be recovered again to the temperature control system 1400. The temperature control system 1400 and respective heat sinks 300 can realize a coolant circulation structure. In addition, the temperature control system 1400 and respective heat sinks 300 can be connected to each other by a coolant line 1500. The coolant line 1500 can be a type of tubular member, and the coolant can flow in the inside of the coolant line 1500.

Specifically, the BMS module 1300 can monitor the temperature of respective battery modules 100 in real time. If heat is generated from the battery modules 100 and the BMS module 1300 determines that the battery module 100 needs to be cooled or heated, the temperature control system 1400 supplies cooled coolant along the coolant line 1500 of the path A. While the coolant can cool the battery modules 100 while circulating through each battery module 100 and each corresponding heat sink 300 via the coolant line 1500. The coolant is then recovered again to the temperature control system 1400 along the coolant line 1500 of the path B. The recovered coolant is cooled again in the temperature control system 1400 and supplied again along the coolant line 1500 of the path A. That is, the coolant can continue to circulate between the temperature control system 1400 and respective heat sinks 300 so that the battery module 100 is cooled to a preset reference temperature.

On the contrary, if the BMS module 1300 determines that the battery module 100 needs to be cooled or heated due to the external environment or rapid charging, the temperature control system 1400 supplies heated coolant along the coolant line 1500 of the path A. The coolant may heat the battery modules 100 while circulating through the coolant line 1500 to each heat sink 300 corresponding to each battery module 100. The coolant is then recovered again to the temperature control system 1400 along the coolant line 1500 of the path B. The recovered coolant may be heated again in the temperature control system 1400 and supplied again along the coolant line 1500 of the path A. That is, the coolant may continue to circulate between the temperature control system 1400 and each heat sink 300 so that the battery module 100 is heated to a preset reference temperature.

The temperature of the battery module 100 in the battery pack 1000 must be continuously maintained between the preset upper limit temperature and lower limit temperature, which is advantageous for achieving the performance of the battery pack 1000. The upper limit temperature and the lower limit temperature can be determined according to various factors such as the capacity, size, and type of battery cells of the battery pack 1000.

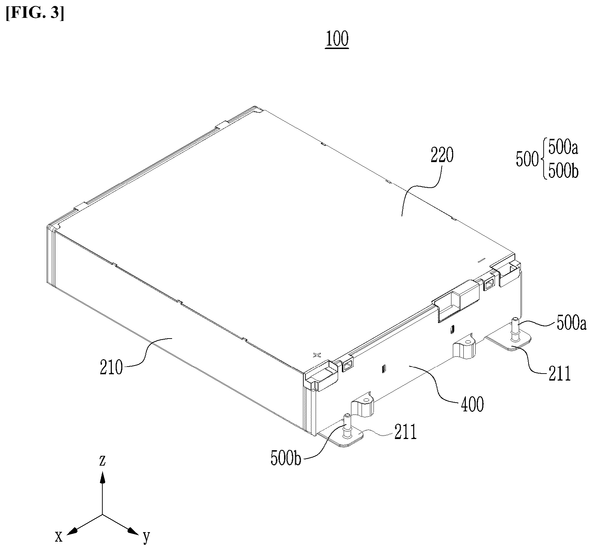

Exemplary structures of the battery module 100 and the heat sink 300 of the present disclosure will be described below. That is, the battery module 100 and the heat sink 300 described below with reference to FIGS. 3 to 5 are merely exemplary structures of the present disclosure, and, if the battery module 100 and the heat sink 300 in the present disclosure can be in one-to-one correspondence with each other, the shape thereof is not particularly limited.

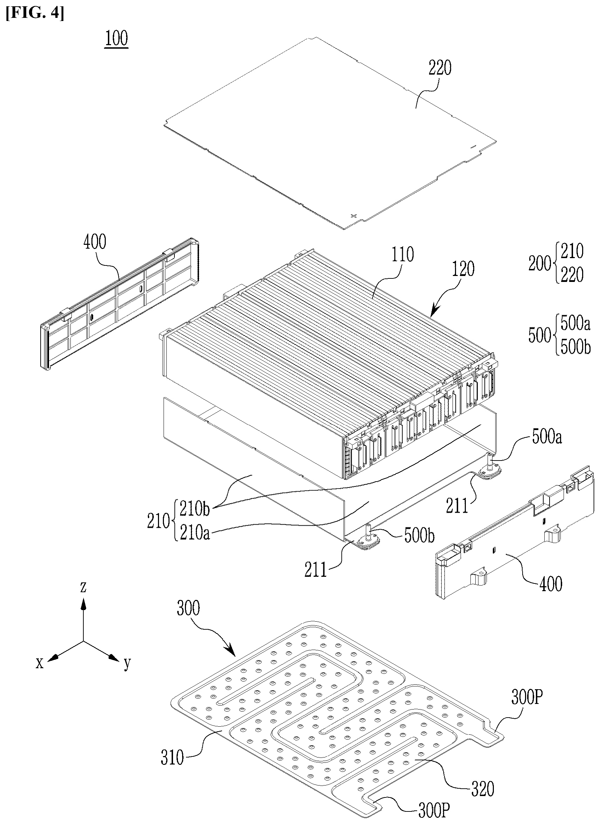

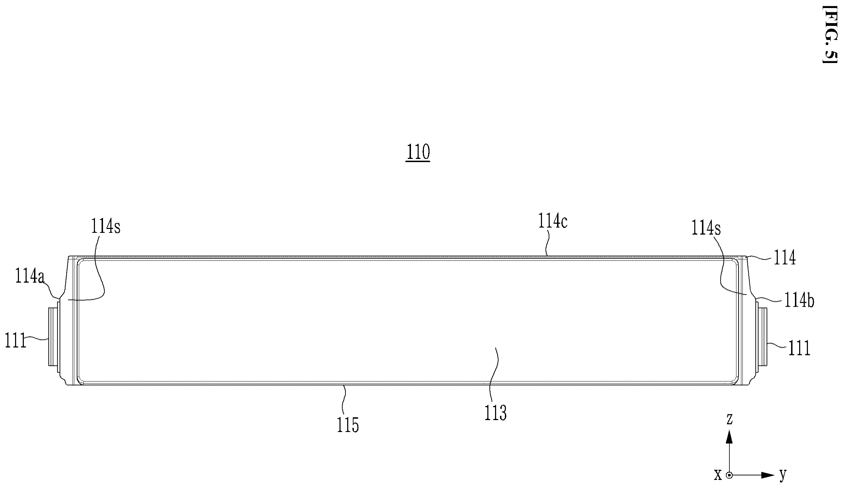

FIG. 3 is a perspective view showing a battery module according to one embodiment of the present disclosure. FIG. 4 is an exploded perspective view of the battery module of FIG. 3. FIG. 5 is a plan view showing one of the battery cells included in the battery module of FIG. 4.

Referring to FIGS. 3 to 5, a battery module 100 according to an embodiment of the present disclosure may include a battery cell stack 120 in which battery cells 110 are stacked, a module frame 200 that houses the battery cell stack 120, and a heat sink 300 located below the bottom part 210a of the module frame 200. As an example, the above-mentioned coolant may flow along the recessed part 320 of the heat sink 300.

First, the battery cell 110 according to the present embodiment may be various types of battery cells, for example, a pouch-shaped battery cell, a prismatic battery cell, or a cylindrical battery cell. As an example, as shown in FIG. 5, the battery cell 110 according to the present embodiment may be a pouch-shaped battery cell. Below, a pouch-shaped battery cell will be described, but the battery cell 110 according to the present embodiment is not limited thereto, and various types of battery cells may be applied.

The battery cell 110 according to the present embodiment may have a structure in which an electrode assembly having electrode leads 111 protruding in one direction or both directions is housed in a pouch case 114. Such battery cells 110 may have a rectangular sheet shape. The battery cell 110 may be formed by housing an electrode assembly in a pouch case 114 made of a laminate sheet including a resin layer and a metal layer, and then adhering the outer peripheral part of the pouch case 114. As an example, the battery cell 110 may have a structure in which two electrode leads 111 face each other and protrude from one end 114a and the other end 114b of the cell main body 113. As another example, a structure in which all the electrode leads 111 of the battery cells 110 protrude in one direction is also possible. One of the electrode leads 111 is a positive electrode lead, and the other is a negative electrode lead.

The battery cell 110 can be produced by adhering both end parts 114a and 114b of a battery case 114 and one side part 114c connecting them in a state in which an electrode assembly (not shown) is housed in a pouch case 114. In other words, the battery cell 110 according to an embodiment of the present disclosure has a total of three sealing parts 114s, wherein the sealing parts 114s have a structure that is sealed by a method such as fusion, and the remaining other one side part may be composed of a folding part 115. That is, the battery cell 110 according to the present embodiment may be a pouch-shaped secondary battery in which the electrode assembly is housed inside the battery case 114 and the outer peripheral part of the battery case 114 is sealed to form a sealing part 114s. In FIG. 5, only a state in which the sealing parts 114s are formed at both end parts 114a and 114b of the battery case 114 are shown, and the sealing part is not shown on the side facing the folding part 115, however, the sealing part on the side facing the folding part 115 may be in a state being folded to one side after sealing has been completed for space utilization.

The battery case 114 of the laminate sheet may include an inner resin layer for sealing, a metal layer for preventing penetration of materials, and an outer resin layer located on the outermost side. Based on the electrode assembly inside the battery case 114, the inner resin layer may be located on the innermost side, the outer resin layer may be located on the outermost side, and the metal layer may be located between the inner resin layer and the outer resin layer.

The outer resin layer has excellent tensile strength and weather resistance relative to the thickness and can have electrical insulation properties in order to protect the electrode assembly from the outside. Such an outer resin layer may include a polyethylene terephthalate(PET) resin or a nylon resin. The metal layer can prevent air, moisture, and the like from flowing into the pouch-shaped secondary battery. This metal layer may include aluminum(Al). The inner resin layers may be heat-sealed to each other by heat and/or pressure applied in a state in which the electrode assembly is embedded. This inner resin layer may include casted polypropylene(CPP) or polypropylene(PP).

The pouch case 114 is divided into two portions, and a concave-shaped housing part in which the electrode assembly can be seated may be formed in at least one of the two portions. Along the outer circumference of this housing part, the inner resin layers of the two portions of the pouch case 114 may be joined to each other to form a sealing part 114s. The pouch case is sealed in this manner, so that the battery cell 110, which is a pouch-shaped secondary battery, can be produced.

A plurality of battery cells 110 may be configured within the battery cell stack 120. The plurality of battery cells 110 may be stacked so as to be electrically connected to each other. In particular, the plurality of battery cells 110 may be stacked in a direction parallel to the x-axis while standing upright. Thereby, the electrode leads 111 may protrude in a direction perpendicular to the direction in which the battery cells 110 are stacked. In the battery cell 110, one electrode lead 111 may protrude toward the y-axis direction, and the other electrode lead 111 may protrude toward the - y-axis direction. If the battery cell 110 is a battery cells that protrude only in one direction, the electrode leads 111 may protrude toward the y-axis direction or the -y-axis direction.

The module frame 200 for housing the battery cell stack 120 may include an upper cover 220 and a U-shaped frame 210. The U-shaped frame 210 may include a bottom part 210a and two side parts 210b extending upward from both ends of the bottom part 210a. The bottom part 210a may cover the lower surface of the battery cell stack 120, and the side parts 210b may cover both side surfaces of the battery cell stack 120, respectively.

The upper cover 220 may be formed in a single plate-shaped structure surrounding the remaining upper surface except for the lower surface and the both side surfaces covered by the U-shaped frame 210. The upper cover 220 and the U-shaped frame 210 are coupled by welding or the like in the state where the corresponding corner portions are in contact with each other, thereby forming a structure that covers the battery cell stack 120 horizontally and vertically. It is possible to physically protect the battery cell stack 120 through the upper cover 220 and the U-shaped frame 210. For this purpose, the upper cover 220 and the U-shaped frame 210 may include a metal material having a predetermined strength.

On the other hand, although not specifically shown in the figure, the module frame 200 according to an exemplary modification may be a mono frame in the form of a metal plate in which the upper surface, the lower surface, and both side surfaces are integrated. That is, it is not a structure in which the U-shaped frame 210 and the upper cover 220 are mutually coupled, but may be produced by extrusion molding, and thus the upper surface, the lower surface, and both side surfaces may be integrated.

The end plate 400 may be located on the open corresponding sides of the module frame 200 and formed to cover the battery cell stack 120. The end plate 400 may physically protect the battery cell stack 120 and other electrical components from external impact. Meanwhile, although not specifically shown in the figure, a busbar frame on which a busbar is mounted, an insulating cover for electrical insulation, etc. may be located between the battery cell stack 120 and the end plate 400.

The module frame 200 according to the present embodiment may include a module frame protrusion part 211 that protrudes from the bottom part 210a of the module frame 200 to pass through the end plate 400. In this case, the coolant may be supplied to or discharged from the heat sink 300 by the cooling port 500 connected to the upper surface of the module frame protrusion part 211. That is, the battery module according to the present embodiment may include cooling ports 500 that supply the coolant to the heat sink 300 or discharge the coolant from the heat sink 300.

Specifically, the cooling port 500 according to the present embodiment may include a coolant injection port 500a for supplying the coolant to the heat sink 300 and a coolant discharge port 500b for discharging the coolant from the heat sink 300. The coolant injection port 500a and the coolant discharge port 500b may be respectively connected to the coolant line 1500. The module frame protrusion parts 211 may be configured in two, the coolant injection port 500a may be disposed on one of these module frame protrusion parts 211, and the coolant discharge port 500b may be disposed on the other of these module frame protrusion parts 211.

Meanwhile, the heat sink 300 may be formed on one surface of the module frame 200. As an example, the heat sink 300 may be located under the bottom part 210a of the module frame 200. However, this is merely an example, and the specific position of the heat sink 300 is not particularly limited as long as it can be located adjacent to the battery module 100 in order to cool or heat the battery module 100.

Such a heat sink 300 may include a lower plate 310 that forms a skeleton of the heat sink 300 and is joined directly to the bottom part 210a of the module frame 200, and a recessed part 320, which is a path through which the coolant flows. Further, the heat sink 300 may include a heat sink protrusion part 300P that protrudes from one side of the heat sink 300 to the portion where the module frame protrusion part 211 is located. That is, the recessed part 320 can be connected between two heat sink protrusion parts 300P, wherein the two heat sink protrusion parts 300P can be a portion into which the coolant flows and a portion from which the coolant discharges, respectively. For this purpose, the heat sink protrusion part 300P can be located to correspond to the module frame protrusion part 211 in which the cooling port 500 is formed. The heat sink protrusion part 300P and the module frame protrusion part 211 can be directly joined to each other by a method such as welding.

The recessed part 320 of the heat sink 300 corresponds to a portion in which the lower plate 310 is formed to be recessed on the lower side. The recessed part 320 may have a U-shaped tube in which a cross section cut perpendicularly to the xz plane or the yz plane with respect to the direction in which the coolant flow passage extends has a U-shape, and the bottom part 210a may be located on the open upper side of the U-shaped tube. While, the lower plate 310 of the heat sink 300 comes into contact with the bottom part 210a, the space between the recessed part 320 and the bottom part 210a forms a region through which the coolant flows, that is, a coolant flow passage. Thereby, the bottom part 210a of the module frame 200 can come directly into contact with the coolant.

The method of producing the recessed part 320 of the heat sink 300 is not particularly limited, but a U-shaped recessed part 320 with an open upper side can be formed by providing a structure formed by being recessed with respect to a plate-shaped heat sink 300.

The recessed part 320 may be connected from one of the heat sink protrusion parts 300P to the other. The coolant supplied through a coolant injection port 500a passes between any one module frame protrusion part 211 and the heat sink protrusion part 300P, and is first flown in the space between the recessed portion 320 and the bottom part 210a. Thereafter, the coolant moves along the recessed part 320, passes between another module frame protrusion part 211 and the heat sink protrusion part 300P, and is discharged through a coolant discharge port 500b.

The battery module 100 shown in FIG. 4 can achieve an integrated type structure of the module frame 200 and the heat sink 300 to further improve cooling or heating performance. The bottom part 210a of the module frame 200 can serve roles corresponding to the upper plate of the heat sink 300, thereby realizing the integrated type structure. The efficiency due to cooling or heating can be increased, and the space utilization rate on the battery module 100 and the battery pack mounted with the battery module can be further improved through a structure in which the heat sink 300 is integrated with the bottom part 210a of the module frame 200. However, this is an example of a heat sink 300 that can be applied to the present disclosure, and the shape of the heat sink 300 in the present disclosure is not particularly limited as long as it corresponds one-to-one with the battery module 100 and can provide a cooling zone that is individually divided for the battery module 100.

Hereinafter, a description is given with regard to a configuration that can individually control the temperature of each battery module by using a control valve provided in a coolant line connected to each heat sink.

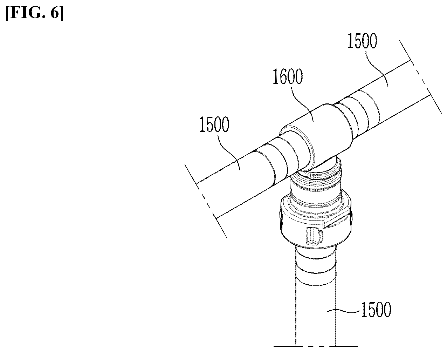

FIG. 6 is a perspective view showing a three-way type control valve according to an embodiment of the present disclosure.

Referring to FIGS. 2 and 6, the battery pack 1000 according to the present embodiment is provided with a coolant line 1500 that connects each heat sink 300 and a temperature control system 1400 as described above. The three-way type control valves 1600 are provided in the coolant line 1500 connected to each of the heat sinks 300. The BMS module 1300 according to the present embodiment adjusts the control valves 1600 based on the temperature of each battery module 100, and controls whether or not a coolant is supplied to the heat sink 300 corresponding to a specific battery module 100.

As schematically shown in FIG. 6, the three-way type control valve 1600 may be a member having three branch pipes. The three-way type control valve 1600 may be connected to three coolant lines 1500, respectively. The three-way type control valve 1600 may be adjusted so that any two of the three branch pipes are communicated with each other. That is, the control valve may be controlled in real time so that any two of the three coolant lines 1500 connected to the control valve 1600 are communicated. The BMS module 1300 may control which two branch pipes are communicated in the control valve 1600.

Referring to FIG. 2, when the battery module 100 is equal to or above or below a preset temperature, the BMS module 1300 can control the control valves 1600 connected to the corresponding heat sink 300 to supply coolant to the heat sink 300.

Specifically, the coolant line 1500 may include a coolant supply line 1510 that supplies the coolant to the heat sink 300 and a coolant discharge line 1520 that discharges the coolant from the heat sink 300.

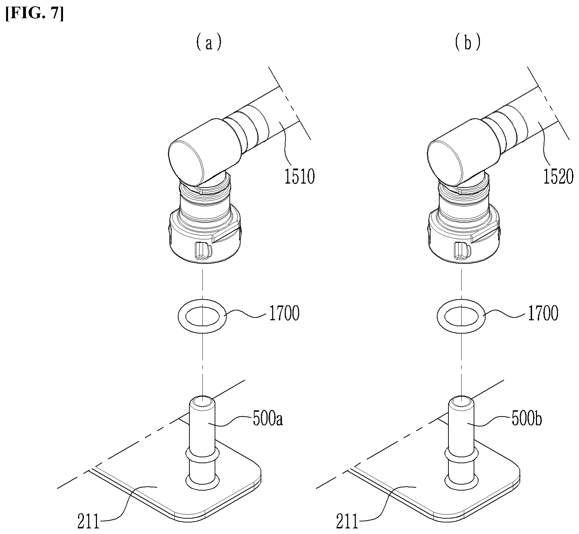

FIGS. 7 (a) and (b) are partial diagrams for explaining a form in which a coolant supply line and a coolant discharge line are connected to a heat sink according to an embodiment of the present disclosure, respectively.

Referring to FIGS. 3, 4 and 7, the coolant supply line 1510 may be connected to the coolant injection port 500a, and the coolant discharge line 1520 may be connected to the coolant discharge port 500b. The coolant flowing along the coolant supply line 1510 may be flowed into the recessed part 320 of the heat sink 300 through the coolant injection port 500a. The coolant flowing along the recessed partn 320 may be discharged to the coolant discharge line 1520 through the coolant discharge port 500b. An O-ring type sealing member 1700 may be fitted between the coolant supply line 1510 and the coolant injection port 500a and between the coolant discharge line 1520 and the coolant discharge port 500b to prevent coolant leakage, respectively. In the present embodiment, the coolant supply line 1510 and the coolant discharge line 1520 are the same type of coolant line 1500, but they may be distinguished based on whether they are connected to any of the coolant injection port 500a and the coolant discharge port 500b.

Referring again to FIG. 2, the control valve 1600 according to the present embodiment may include a first control valve 1610 connected to a coolant supply line 1510, and a second control valve 1620 connected to a coolant discharge line 1520. The BMS module 1300 may adjust the paths of the first control valve 1610 and the second control valve 1620, thereby controlling whether or not the coolant circulates to the heat sink 300, and the flow rate of the coolant flowing through the heat sink 300.

Specifically, when a temperature of the first battery module 100a is equal to or more than the upper limit temperature or equal to or less than the lower limit temperature, and the BMS module 1300 determines that the first battery module 100a needs to be cooled or heated, the paths of the first control valve 1610 and the second control valve 1620 can be controlled by the BMS module 1300 so that the coolant flows along the coolant supply line 1510 and the coolant discharge line 1520 connected to the first heat sink 300a. That is, the first control valve 1610 and the second control valve 1620 can be adjusted so that the coolant flows along the D1 path in FIG. 2. While the coolant flows inside the first heat sink 300a along the D1 path, the first battery module 100a may be cooled or heated. In addition, by adjusting the degree of opening and closing of each branch pipe in the first control valve 1610 and the second control valve 1620, the flow rate of the coolant flowing inside the first heat sink 300a along the D1 path can also be adjusted. If the BMS module 1300 determines that the first battery module 100a needs to be cooled or heated, the first control valve 1610 and the second control valve 1620 can be adjusted so that the coolant flows along the C1 path. In addition, while a part of the coolant flows along the C1 path and another part of the coolant flows along the D1 path, the flow rate of the coolant flowing inside the first heat sink 300a is adjusted, so that the degree of cooling or heating for the first battery module 100a can be adjusted.

Similarly, when a temperature of the second battery module 100b is equal to or more than the upper limit temperature or equal to or less than the lower limit temperature, and the BMS module 1300 determines that the second battery module 100b needs to be cooled or heated, the paths of the first control valve 1610 and the second control valve 1620 can be adjusted by the BMS module 1300 so that the coolant flows along the coolant supply line 1510 and the coolant discharge line 1520 connected to the second heat sink 300b. That is, the first control valve 1610 and the second control valve 1620 can be adjusted so that the coolant flows along the D2 path in FIG. 2. While the coolant flows inside the second heat sink 300b along the D2 path, the second battery module 100b may be cooled or heated. In addition, the degree of opening and closing of each branch pipe is adjusted by the first control valve 1610 and the second control valve 1620, so that the flow rate of the coolant flowing inside the second heat sink 300b along the D2 path can also be adjusted. If the BMS module 1300 determines that the second battery module 100b does not need to be cooled or heated, the first control valve 1610 and the second control valve 1620 can be adjusted so that the coolant flows along the C2 path. Further, while a part of the coolant flows along the C2 path and another part of the coolant flows along the D2 path, the flow rate of the coolant flowing inside the second heat sink 300b is adjusted, so that the degree of cooling or heating for the second battery module 100b can be adjusted.

Similarly, when a temperature of the third battery module 100c is equal to or more than the upper limit temperature or equal to or less than the lower limit temperature, and the BMS module 1300 determines that the third battery module 100c needs to be cooled or heated, the paths of the first control valve 1610 and the second control valve 1620 can be adjusted by the BMS module 1300 so that the coolant flows along the coolant supply line 1510 and the coolant discharge line 1520 connected to the third heat sink 300c. That is, the first control valve 1610 and the second control valve 1620 can be adjusted so that the coolant flows along the D3 path in FIG. 2. While the coolant flows inside the third heat sink 300c along the D3 path, the third battery module 100c may be cooled or heated. Further, the degree of opening and closing of each branch pipe is adjusted by the first control valve 1610 and the second control valve 1620, so that the flow rate of the coolant flowing inside the third heat sink 300c along the D3 path can also be adjusted. If the BMS module 1300 determines that the third battery module 100c does not need to be cooled or heated, the first control valve 1610 and the second control valve 1620 can be adjusted so that the coolant flows along the C3 path. Further, while a part of the coolant flows along the C3 path and another part of the coolant flows along the D3 path, the flow rate of the coolant flowing inside the third heat sink 300c is adjusted, so that the degree of cooling or heating for the third battery module 100c can be adjusted.

Similarly, when a temperature of fourth battery module 100d is equal to or more than the upper limit temperature or equal to or less than the lower limit temperature, and the BMS module 1300 determines that the fourth battery module 100d needs to be cooled or heated, the paths of the first control valve 1610 and the second control valve 1620 can be adjusted by the BMS module 1300 so that the coolant flows along the coolant supply line 1510 and the coolant discharge line 1520 connected to the fourth heat sink 300d. That is, the first control valve 1610 and the second control valve 1620 can be adjusted so that the coolant flows along the D4 path in FIG. 2. While the coolant flows inside the fourth heat sink 300d along the D4 path, the fourth battery module 100d may be cooled or heated. Further, the degree of opening and closing of each branch pipe is adjusted by the first control valve 1610 and the second control valve 1620, so that the flow rate of the coolant flowing inside the fourth heat sink 300d along the D4 path can also be adjusted. If the BMS module 1300 determines that the fourth battery module 100d does not need to be cooled or heated, the first control valve 1610 and the second control valve 1620 can be adjusted so that the coolant flows along the C4 path. Further, while a part of the coolant flows along the C4 path and another part of the coolant flows along the D4 path, the flow rate of the coolant flowing inside the fourth heat sink 300d is adjusted, so that the degree of cooling or heating for the fourth battery module 100d can be adjusted.

At this time, the upper limit temperature and the lower limit temperature can be determined according to various factors such as the size of the battery module, the battery capacity, and the type of the battery cell.

Taken together, in the battery pack 1000 according to the present embodiment, the temperature of each battery module 100 can be adjusted independently from each other by using the control valve 1600 provided in the coolant line 1500 connected to each heat sink 300. That is, by changing two branch pipes that communicate with each other in the three-way type control valve 1600, the supply of the coolant to a specific heat sink 300 can be adjusted. Further, the degree of opening and closing of the branch pipe in the three-way type control valve 1600 can be adjusted, so that the flow rate of the coolant flowing through a specific heat sink 300 can also be adjusted. Since the temperature of the battery modules 100 can be adjusted independently from each other in this way, the temperature deviation between respective battery modules 100 can be minimized, and the minimized temperature deviation can lead to improved performance of the battery modules 100 and suppression of deterioration of the battery cells 110.

Hereinafter, in an embodiment of the present disclosure, a method of utilizing waste heat to heat a coolant using a PRA module 1200 will be described.

Referring again to FIG. 2, the battery pack 1000 according to the present embodiment may include a PRA module 1200 capable of cutting off electrical connections between battery modules as described above. Further, the battery pack 1000 may further include a control heat sink 300' connected to a coolant line 1500' while being disposed to correspond to the PRA module 1200. The control heat sink 300' according to the present embodiment is a member in which a coolant circulates inside, and may have the same or similar structure as the heat sink 300. A three-way type control valve 1600' may be provided in the coolant line 1500' connected to the control heat sink 300'.

The coolant line 1500' connected to the control heat sink 300' may include a coolant supply line 1510' that supplies the coolant to the control heat sink 300' and a coolant discharge line 1520' that discharges the coolant from the control heat sink 300'.

In addition, the control valve 1600' may include a first control valve 1610' connected to the coolant supply line 1510' and a second control valve 1620' connected to the coolant discharge line 1520'. The BMS module 1300 may adjust the paths of the first control valve 1610' and the second control valve 1620', thereby controlling whether or not the coolant circulates to the control heat sink 300', and the flow rate of the coolant flowing through the control heat sink 300'.

Specifically, the coolant supplied from the temperature control system 1400 can pass through the control valve 1600' disposed in the coolant line 1500' corresponding to the control heat sink 300', and flow to the control valve 1600' disposed in the coolant line 1500' corresponding to the heat sink 300. The coolant can first flow through the control valve 1600' corresponding to the control heat sink 300' before the control valve 1600 corresponding to the heat sink 300.

The BMS module 1300 can control the control valve 1600' connected to the control heat sink 300' to adjust the temperature of the coolant. Specifically, the coolant flowing along the control heat sink 300' can be heated by the heat generated from the PRA module 1200, thereby adjusting the temperature of the coolant. The first control valve 1610' and the second control valve 1620' can be adjusted so that the coolant supplied from the temperature control system 1400 flows along the path D'. While the coolant flows inside the control heat sink 300' along the path D', it may be heated by the heat generated from the PRA module 1200. If heating of the coolant is not required, the first control valve 1610' and the second control valve 1620' can be adjusted so that the coolant flows along the path C'. Further, a part of the coolant can flow along the path C' and at the same time, another part of the coolant can flow along the path D', so that the degree of heating by the PRA module 1200 can be adjusted.

When the BMS module 1300 determines that the battery modules 100 needs to be heated, the circulating coolant can be heated by a separate heating element in the temperature control system 1400. However, in the present embodiment, the coolant is not heated by using a separate heating element of the temperature control system 1400, but rather, the coolant can be heated by using the heat generated from the PRA module 1200, i.e., waste heat. That is, in the present embodiment, energy harvesting can be made by using the PRA module 1200, thereby improving the energy efficiency of the entire device, such as a vehicle equipped with the battery pack 1000.

In the embodiments above, expressions indicating directions such as "front," "rear," "left," "right," "up," and "down" have been used. However, these expressions are used only to facilitate the description, and may vary, for example, depending on the location of a target object or an observer.

The battery pack according to an embodiment of the present disclosure described above may be applied to various devices, and specifically, include transportation vehicles such as electric bicycles, electric vehicles, and hybrids, and energy storage systems (ESS). However, without being limited thereto, the battery pack may be applied to various devices using secondary batteries.

While the embodiments of the present disclosure have been described in detail, the technical scope of the present disclosure is not limited to the embodiments, and also includes various modifications and improvements made by one of ordinary skill in the art using the concepts defined in the claims attached therewith.

### [Description of Reference Numerals]

100, 100a, 100b, 100c, 100d: battery module
200: module frame
300, 300a,300b, 300c, 300d: heat sink
1000: battery pack
1100: pack frame
1200: PRA module
1300: BMS module
1400: temperature control system
1500: coolant line
1600: control valve

## Claims

1. A battery pack comprising:
a plurality of battery modules including a plurality of battery cells;
heat sinks that are disposed to correspond to each of the battery modules and cool the battery modules;
a temperature control system that supplies and recovers a coolant to the heat sinks;
a coolant line that connects the heat sinks and the temperature control system; and
a BMS (Battery Management System) module that monitors and controls the state of the battery modules,
wherein a three-way type control valve is provided in the coolant line connected to each of the heat sinks, and
wherein the BMS module adjusts the control valves based on the temperature of the battery module and controls whether or not a coolant is supplied to the heat sink corresponding to the battery module.

2. The battery pack of claim 1,
wherein the heat sinks are respectively disposed in one-to-one correspondence to each of the battery modules, so that the battery modules have individually divided cooling zones.

3. The battery pack of claim 1,
wherein when a temperature of the battery module is equal to or more than the upper limit temperature or equal to or less than the lower limit temperature, the BMS module controls the control valve connected to the heat sink corresponding to the battery module to supply a coolant to the heat sink.

4. The battery pack of claim 1,
wherein the coolant line comprises a coolant supply line that supplies the coolant to the heat sink, and a coolant discharge line that discharges the coolant from the heat sink, and
the control valve comprises a first control valve connected to the coolant supply line, and a second control valve connected to the coolant discharge line.

5. The battery pack of claim 4,
wherein the BMS module adjusts the paths of the first control valve and the second control valve or the degree of opening and closing thereof, thereby controlling whether or not the coolant circulates to the heat sink or the flow rate of the coolant flowing through the heat sink.

6. The battery pack of claim 1,
further comprising a PRA (Power Relay Assembly) module that controls the electrical connection of the battery modules.

7. The battery pack of claim 6,
further comprising a control heat sink that is connected to the coolant line while being disposed to correspond to the PRA module,
wherein the control valve is provided in the coolant line connected to the control heat sink.

8. The battery pack of claim 7,
wherein the coolant supplied from the temperature control system passes through the control valve disposed in the coolant line corresponding to the control heat sink, and flows to the control valve disposed in the coolant line corresponding to the heat sink.

9. The battery pack of claim 7,
wherein the BMS module controls the control valve connected to the control heat sink to adjust the temperature of the coolant.

10. The battery pack of claim 7,
wherein, while the coolant flowing along the control heat sink is being heated by heat generated from the PRA module, the temperature of the coolant is adjusted.

11. A device comprising the battery pack of claim 1.
